# EUROPEAN PATENT SPECIFICATION

(11) **EP 0 667 501 B1**
(45) Date of publication and mention of the grant of the patent: **09.06.1999**
(21) Application number: 95102050.2
(22) Date of filing: 15.02.1995
(51) Int. Cl.: F25D 3/11, A23L 3/36, A23L 3/375

(54) **Tunnel freezer**
Gefriertunnel
Tunnel de congélation

(30) Priority: 15.02.1994 GB 9402884
(43) Date of publication of application: 16.08.1995
(73) Proprietor: AIR PRODUCTS AND CHEMICALS, INC., Allentown, PA 18195-1501 (US)
(72) Inventor: Miller, Jeremy Paul, Nr. Reading RG7 3SL, Berkshire (GB); Wilyman, Peter Robert, Marlow, Buckinghamshire SL7 1HX (GB)
(74) Representative: Lucas, Brian Ronald

(56) References cited:
- FR-A- 2 244 973
- US-A- 3 376 710
- US-A- 4 276 753
- US-A- 4 912 943
- US-A- 4 934 151
- US-A- 5 222 363

## Description

### FIELD OF THE INVENTION

This invention relates to a tunnel freezer.

### Background of the Invention

Tunnel freezers generally comprise an elongate tunnel having a product inlet and a product outlet. A conveyor is arranged to transport product through the tunnel in counter-current flow to a stream of cryogenic fluid which is introduced, typically as liquid, from a spray bar adjacent the product outlet and exists via an exhaust duct adjacent the product inlet.

The tunnel itself generally contains two types of fan, viz:-
1. Gas transfer fans; and
2. Turbulence inducing fans.

The gas transfer fans generally resemble hair dryers and suck cryogenic vapour upwardly from the conveyor and blow it along the elongate tunnel towards the exhaust duct.

In contrast, the turbulence inducing fans are designed to circulate gas to enhance heat transfer to the product on the conveyor. Typically, gas will leave turbulence inducing fans in all directions, i.e. with no net movement along the elongate tunnel. Occasionally, diverters are provided to direct gas leaving the turbulence inducing fans towards the sides of the tunnel, i.e. to inhibit movement of gas towards the exhaust duct.

Typically, a 10m long tunnel will include 1 or 2 gas transfer fans and from 10 to 20 turbulence inducing fans.

At the present time most turbulence inducing fans are driven at a fixed speed. US-A-4 912 943 discloses a freezer which is provided with variable speed turbulence inducing fans. In this document the speed of the fans is varied to prevent products being blow off a conveyor belt.

However, the speed of the fans can not be adjusted to perform the present invention.

We have discovered that, for certain products, for example turkeys, chicken and gateaux, the speed of the turbulence inducing fans can be very much reduced without materially affecting the overall time taken for the product to freeze throughout. By reducing the speed of the turbulence inducing fans the overall power consumption of the tunnel freezer is reduced. In addition, since less work is performed by the turbulence inducing fans on the cryogenic vapour in the tunnel freezer the cryogenic vapour remains colder and less is needed.

According to the present invention there is provided a method of operating a tunnel freezer having at least one turbulence inducing fan and means to drive said turbulence inducing fan, characterised by the step of adjusting the output of said fan so that any increase in the output thereof will not materially reduce the overall time for the product to freeze throughout whilst a reduction in output will materially increase the overall time for the product to freeze throughout.

Preferably, said tunnel freezer has at least two sections, each section having a temperature sensor, means for supplying a cryogenic fluid to said section in response to said temperature sensor, at least one turbulence inducing fan and means to adjust the output of said turbulence inducing fan, characterised by the step of maintaining said sections at different temperatures when said tunnel freezer is in use.

In a preferred embodiment said tunnel includes four sections.

Advantageously, said temperatures are -40°C±5°C; -73°C±5°C; -107°C±5°C; and -140°C±5°C.

According to the present invention there is provided a tunnel freezer for carrying out the method according to the invention, the tunnel freezer having at least one turbulence inducing fan and means to drive said turbulence inducing fan, said tunnel freezer further comprising means to vary the output of said turbulence inducing fan so that any increase in the output thereof will not materially reduce the overall time for the product to freeze throughout whilst a reduction in speed will materially increase the time for the product to freeze throughout.

The output of the fan will generally be varied by adjusting its speed. However, it is conceivable that it could be adjusted by varying the pitch of the blades. For convenience references herein to adjusting the speed of the turbulence inducing fan include adjusting the pitch of the blades.

Preferably, said means is capable of reducing the speed of said turbulence inducing fan(s) to about 50%, more preferably 30%, advantageously 20% and more advantageously 5% of its normal operating speed.

Our initial experiments have indicated that each product must be individually tested. This can be achieved by inserting a thermocouple in the centre of the product and measuring the time taken for the desired temperature to be reached with different turbulence inducing fan speeds.

At the moment the main factor appears to be the speed at which a cold front will move across the product and the thickness of the product. At one extreme a thin hamburger will cool throughout extremely rapidly. At the other extreme, the stuffing in a large turkey will take several hours to freeze almost independent of the speed of the turbulence inducing fans until the speed of the turbulence inducing fans is reduced to below 20% of its normal operating speed.

Advantageously, a control unit will be provided which will be programmed with turbulence inducing fan speeds suitable for use with a particular product. In use, when it is desired to cool/freeze a particular product the operator will simply press a button corresponding to the product and the turbulence inducing fan speed appropriate to that product will automatically be selected.

If it is intended to freeze batches of different items where the thickness may be different, for example a batch of small gateaux about 100mm high followed by a batch of large gateaux with a height of about 150mm a height gauge may be placed adjacent the product inlet of the tunnel.

When the batch of small gateaux is being frozen a turbulence inducing fan speed of about 75% normal operating speed may be appropriate whilst when the batch of large gateaux is being frozen the height gauge automatically reduces the speed of the turbulence inducing fans by 50%. Low turbulence inducing fan speeds are also appropriate for freezing foodstuffs in cardboard cartons, for example pre-prepared meals.

Conventionally, the amount of liquid nitrogen supplied to a tunnel freezer is controlled so that temperature at a temperature sensor in the tunnel freezer remains substantially constant. The location of the temperature sensor varies from manufacturer to manufacturer but is usually either midway along the tunnel freezer or offset towards the liquid nitrogen supply. Whilst this arrangement is quite satisfactory for freezing products such as hamburgers at the rated capacity of the freezing tunnel various problems arise with thick products and those which are insulated, for example precooked meals in cardboard boxes. In these cases, although the temperature at the temperature sensor may be correct the temperature in the exhaust duct can be very low due to the low total heat transfer between the cold nitrogen vapour and the insulated product.

According to the present invention the speed of the turbulence inducing fans can be individually adjusted to provide heat transfer at a rate compatible with the maximum rate at which the product can be frozen.

Whilst suitable speeds for the turbulence inducing fans can be found for steady state operation, i.e. when the flow of product to be frozen is uniform this is rarely the case in practice.

In a radical departure from existing tunnel freezers the present invention proposes a tunnel freezer having two or more sections each of which is provided with at least one turbulence inducing fan and each of which is also provided with a temperature sensor and means for supplying cryogenic fluid to said section in response to the temperature in said section.

In use, each section is operated at a substantially constant predetermined temperature whilst the speed of the turbulence inducing fan(s) in the section is varied in accordance with the product to be frozen, e.g. rated speed for hamburgers, 20% of rated speed for large turkeys.

It is anticipated that one tunnel freezer in accordance with the invention will have four sections with temperatures of -40°C±5°C, -73°C±5°C, -107°C±5°C, and -140°C±5°C respectively, the warmest section being adjacent the exhaust duct.

In this case the speed of the turbulence inducing fan(s) in each section is varied according to the product to be frozen. Typically, if the tunnel freezer is idle, the speed of the turbulence inducing fans could be reduced to about 5% of their rated speed. This is sufficient to avoid excessive stratification of the cold nitrogen vapour within the tunnel freezer whilst providing minimal heat input.

If a product such as a hamburger is introduced into the freezer, i.e. a product which is thin, small and can readily be frozen, the turbulence inducing fans are rotated at their rated value. However, if the product to be frozen is a thick gateaux the speed of the turbulence inducing fans is adjusted to the point where additional rotational speed would not materially decrease the total time to cool the product.

Generally, the temperature to which foodstuffs should be frozen is in the range -15°C to -25°.

In a fully automated system a controller is advised that the product should emerge from the tunnel freezer at -20°C. An infra-red camera is positioned adjacent the product outlet. The temperature of the frozen product is then sensed. If it is colder than -20°C a control signal automatically reduces the speed of the turbulence inducing fans. If the temperature is -20°C then the speed of the turbulence inducing fans is then reduced in small increments until the temperature of the product rises slightly at which time the speed of the turbulence inducing fan is increased slightly. It should be noted that reducing the speed of the turbulence inducing fans does not necessarily mean that the product will be warmer as explained hereinbefore.

In conventional tunnel freezers the user is free to adjust the set point of the temperature sensor in his freezer. This can be extremely wasteful since normally a reduction of the set point results in a corresponding drop in temperature in the exhaust gas - which is very wasteful.

In preferred embodiments of the invention the temperature in each section is determined by a non-adjustable pre-programmed chip so that no adjustment is possible. The user varies the rate of cooling by adjusting the speed of the turbulence inducing fan(s) in each section which may be controlled in common or be individually controlled as desired.

For a better understanding of the present invention reference will now be made, by way of example to the accompanying drawings, in which:-

### Brief Description of the Drawings

Figure 1 is a side view of one embodiment of a tunnel freezer in accordance with the invention;
Figure 2 is a section on line II-II of Figure 1;
Figure 3 is a vertical section through one module of the tunnel freezer taken on the line III of Figure 1;
Figure 4 is a top plan view showing a modification; and
Figure 5 is a graph showing the approximate temperature profile in the tunnel freezer in use.

### Detailed Description of the Preferred Embodiments

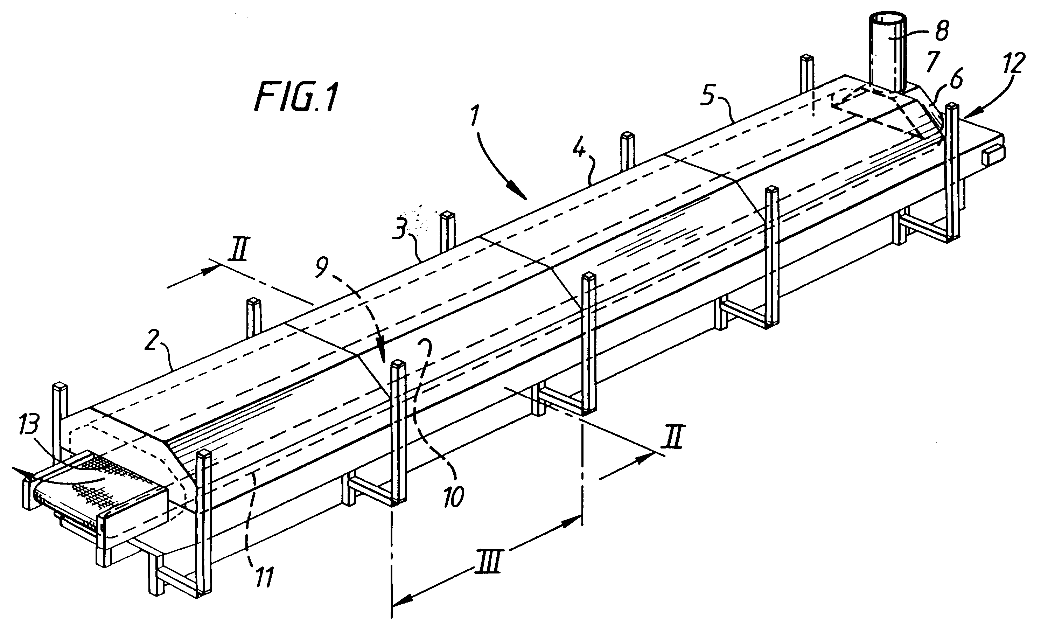

Referring to Figure 1 of the drawings, there is shown a tunnel freezer which is generally identified by reference numeral 1.

The tunnel freezer comprises five modules 2, 3, 4, 5 and 6.

Modules 2, 3, 4 and 5 are identical whilst module 6 comprises an exhaust hood 7 connected to an exhaust duct 8 in which is mounted a variable speed extractor fan (not shown).

A conveyor 9 having an upper reach 10 and a lower reach 11 extends along the tunnel freezer 1 from product inlet 12 to product outlet 13.

Since the modules 2, 3, 4 and 5 are identical only module 3 will now be described in detail.

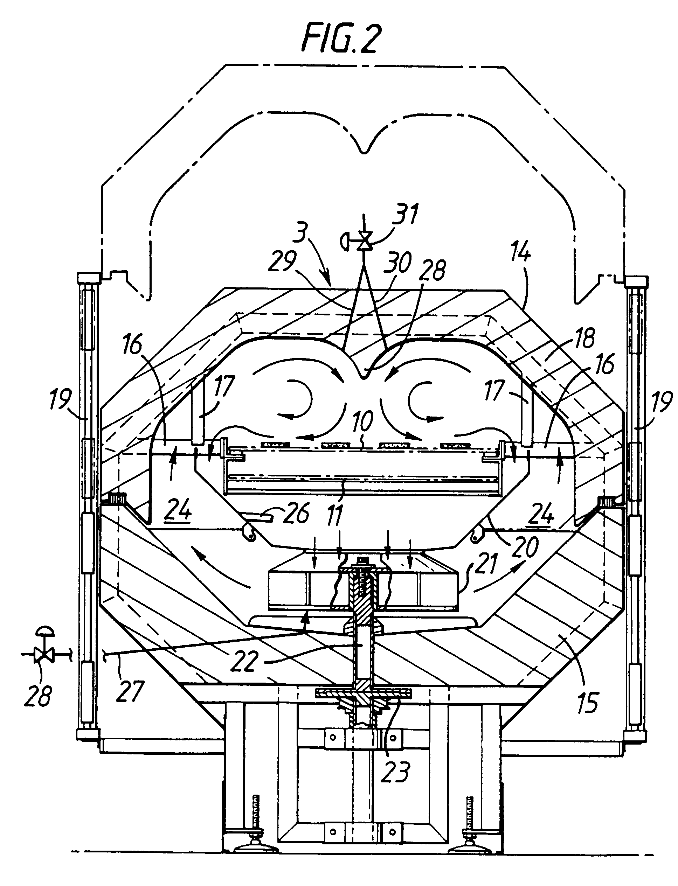

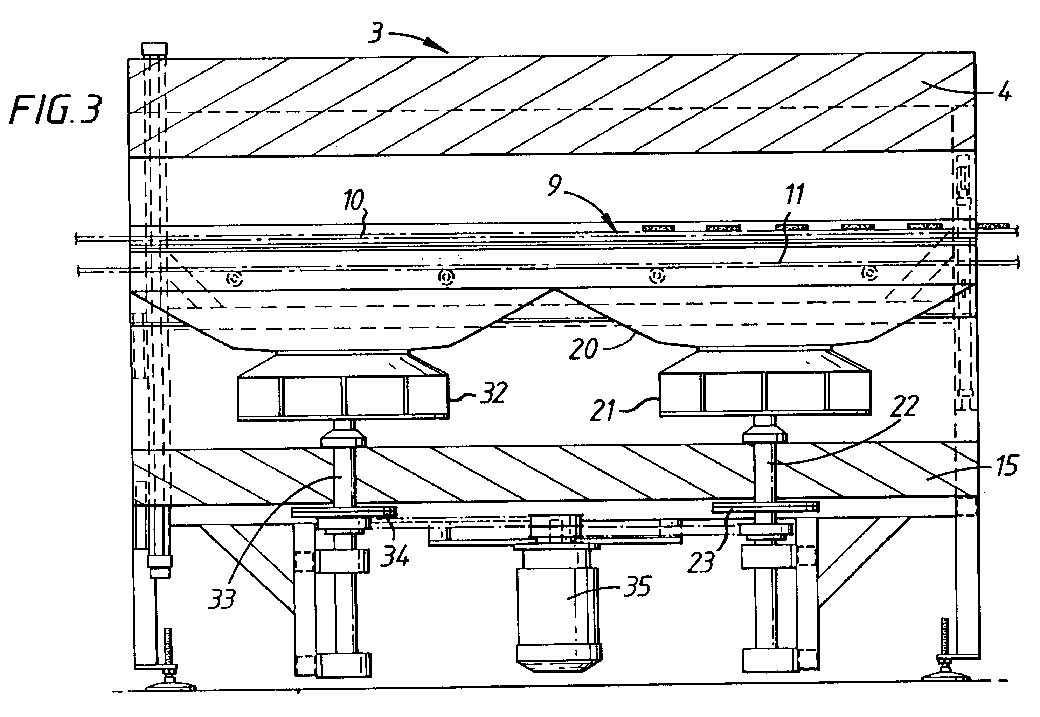

Referring to Figures 2 and 3, module 3 comprises a roof section 14 and a base section 15. The conveyor 9 is supported by structural members 16 and 17 which are welded to a sub-frame 18 which is supported by a main frame 19. The base section 15 is secured to the main frame 19 whilst the roof section 14 is slidably mounted on the main frame 19 and can be raised to the position shown in dotted lines in Figure 2 to allow access to the conveyor 9.

A cowl 20 is disposed below the conveyor 9. The cowl 20 opens below and to either side of the conveyor 9 and extends downwardly to the intake of a turbulence inducing fan 21 which is mounted on a drive shaft 22 which extends through the base section 15 of the tunnel freezer 1 and is provided with a drive pulley 23.

Passageways 24 are formed along each side of the tunnel freezer 1 between the cowl 20 and the inside of the base section 15 and part of the roof section 14.

The roof section 14 is provided with a deflector which, in cross-section, is in the form of a cusp. A temperature sensor 26 is mounted on the cowl 20 and extends below the lower reach 11 of the conveyor 9 as shown.

A liquid nitrogen supply line 27 extends through the base section 15 and terminates in a nozzle beneath the turbulence inducing fan 21. Flow through the liquid nitrogen supply line 27 is controlled by a solenoid valve 28 which is either ON or OFF. Liquid nitrogen supply lines 29 and 30 extend through the roof section 14 and terminate in nozzles which open through the sides of the deflector as shown. Flow through the liquid nitrogen supply lines 29 and 30 is controlled by a solenoid valve 31 which is either ON or OFF.

As shown in Figure 3, module 2 comprises a second turbulence inducing fan 32 which is mounted on a drive shaft 33 having a drive pulley 34. Both the turbulence inducing fans 21 and 32 can be rotated by a common variable speed motor 35.

A liquid nitrogen supply line similar to liquid nitrogen supply line 27 is associated with turbulence inducing fan 32 but, like liquid nitrogen supply line 27, cannot be seen in Figure 3 as it is disposed behind the drive shaft 33.

Similarly, liquid nitrogen supply lines similar to liquid nitrogen supply lines 29 and 30 are disposed in the roof section 14 above the turbulence inducing fan 32.

Modules 2, 3, 4 and 5 are intended to operate at -40°C, -73°C, -107°C, and -140°C respectively.

The operation of the tunnel freezer 1 will now be described.

At the commencement of operation the turbulence inducing fans in the modules 2, 3, 4 and 5 are brought up to their rated speeds. Also the exhaust fan in the exhaust duct 8 is adjusted to rotate quite slowly.

Liquid nitrogen is admitted to each module by opening the solenoid valves associated with each module. The speed of the fan in the exhaust duct 8 is adjusted to inhibit nitrogen vapour entering the workplace via product outlet 13 and product inlet 12.

As the temperature in each module reaches its preset level the solenoid valves in the module are closed and the speed of the turbulence inducing fans associated with the module is reduced to 5% of its rated value. This is sufficient to inhibit significant stratification. If the temperature in the module rises the solenoid valves in the roof section 14 are opened until the temperature returns to the desired level.

Once the modules 2, 3, 4 and 5 have all reached their desired temperature with the turbulence inducing fans idling the fan in the exhaust duct 8 is set on automatic control. In this mode the speed of the exhaust fan is regulated by an oxygen sensor in the exhaust duct 8 which regulates the speed of the fan so that the oxygen content is kept substantially constant at a value reflecting a small ingress of air through the product inlet 12.

If a large number of easily frozen products, such as hamburgers, are to be frozen the turbulence inducing fans are set to rotate at their rated speed. The work performed on the nitrogen vapour by the turbulence inducing fans warms the vapour and the solenoid valves 31 open and close to maintain the temperature at each temperature sensor substantially at its predetermined level.

As the hamburgers are introduced into the product inlet 12 they create a heat load which is met by the solenoids in the roof sections 14 opening as desired. If the heat load is too great then the solenoid valves in the base section 15 are opened and closed as desired.

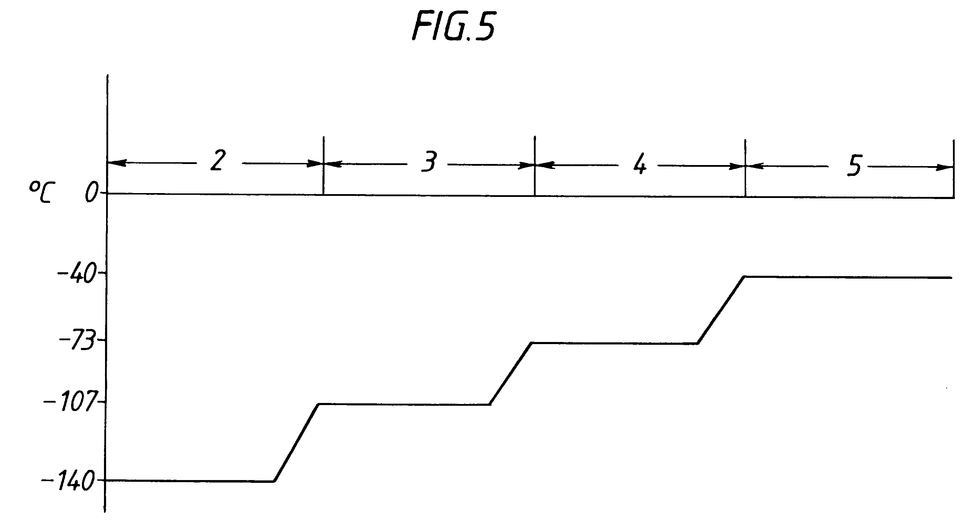

The approximate temperature profile in the tunnel freezer 1 is shown in Figure 5.

The temperature of the frozen product leaving the product outlet 13 is monitored either by hand or with the use of an infra-red camera (not shown). If the product is too cold the speed of the turbulence inducing fans may be reduced. This may be effected by reducing the speed of all the turbulence inducing fans or only some. Conveniently, small amounts of excess cooling can be avoided by reducing the speed of the turbulence inducing fans in module 2.

When it is desired to freeze larger items, such as gateaux or turkeys, the speed of the turbulence inducing fans is set to about 40% of the normal speed. The turkeys are then passed through the tunnel freezer and emerge slightly colder than required. The speed of the turbulence inducing fans is then reduced incrementally until the frozen turkeys emerge at the desired temperature. The speed of the turbulence inducing fans is then further reduced. Interestingly, this may have no effect on the temperature of the emerging turkeys since the freezing process may be controlled by the thickness of the turkey and the speed at which the freezing front travels across the turkey may not be enhanced by excess turbulence inducing fan speed. The speed of the turbulence inducing fans is reduced incrementally until the product leaving the freezer is warmer than required. At that time the speed of the turbulence inducing fans is increased until the desired product temperature is obtained.

It will be noted that the control of the freezing process described is totally different from known freezers. In particular, each section is maintained at a preset temperature throughout and the speed of the turbulence inducing fans is varied. Furthermore, each module has its own individual temperature control system and turbulence inducing fan speed control.

The tunnel freezer 1 thusfar described has the disadvantage that whilst the turbulence inducing fans direct some of the cryogenic fluid through the passageways 24 part is directed axially along the tunnel freezer 1. This is generally undesirable.

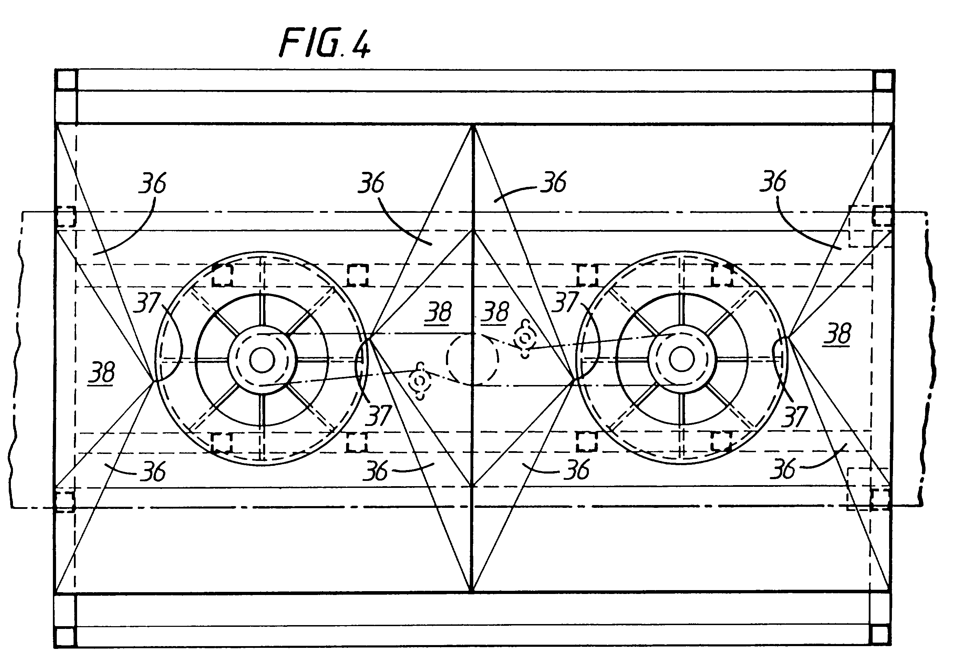

In order to reduce this problem, and to help divide the flow of cryogenic fluid equally between the passages 12 deflectors may be provided as shown in Figure 4. In particular, deflectors 36 are provided which are inclined upwardly from the base section 15 and away from the turbulence inducing fan with which they are associated as shown. Each deflector 36 is generally triangular in shape and extends from a tip 37 adjacent the base section 15 to the cowl 20 at its widest point. A cover plate 38 and the whole structure is filled with an insulator. The tips 37 are offset from the centre line of the tunnel freezer to help ensure that the cryogenic fluid is equally divided between the passageways 24.

The embodiment described also has useful safety implications. In particular, in the prior art it was not unknown for a customer to use excessive amounts of liquid nitrogen in an attempt to increase the throughput of his tunnel. This often resulted in liquid nitrogen lying in pools in the base of the tunnel. This, in turn, caused air to liquefy in the insulation. When the tunnel was turned off the liquefied air expanded explosively buckling the walls of the tunnel. The predetermined temperature control of the preferred embodiment obviates this problem.

## Claims

1. A method of operating a tunnel freezer having at least one turbulence inducing fan and means to drive said turbulence inducing fan, characterised by the step of adjusting the output of said fan so that any increase in the output thereof will not materially reduce the overall time for the product to freeze throughout whilst a reduction in output will materially increase the overall time for the product to freeze throughout.

2. A method according to Claim 1, wherein said tunnel freezer has at least two sections (2, 3, 4, 5), each section (3) having a temperature sensor (26), means (22, 29, 30) for supplying a cryonic fluid to said section in response to said temperature sensor (26), at least one turbulence inducing fan (21, 32) and means (35) to adjust the output of said turbulence inducing fan (21, 32), characterised by the step of maintaining said sections at different temperatures when said tunnel freezer is in use.

3. A method according to Claim 2, wherein said tunnel includes four sections.

4. A method according to Claim 3, wherein said temperatures are -40°C±5°C; -73°C±5°C; -107°C±5°C; and -140°C±5°C.

5. A tunnel freezer for carrying out a method according to Claim 1, said tunnel freezer (1) having at least one turbulence inducing fan (21, 32) and means (35) to drive said turbulence inducing fan (21, 32), said tunnel freezer (1) further comprising means (35) to vary the output of said turbulence inducing fan so that any increase in the output thereof will not materially reduce the overall time for the product to freeze throughout whilst a reduction in output will materially increase the time for the produce to freeze throughout.

6. A tunnel freezer as claimed in Claim 5, characterized in that said means (35) is capable of reducing the speed of said turbulence inducing fan (21, 32) to about 50% of its normal operating speed.

7. A tunnel freezer as claimed in Claim 6, characterized in that said means (35) is capable of reducing the speed of said turbulence inducing fan (21, 32) to about 30% of its normal operating speed.

8. A tunnel freezer as claimed in Claim 7, characterized in that said means (35) is capable of reducing the speed of said turbulence inducing fan (21, 32) to about 20% of its normal operating speed.

9. A tunnel freezer as claimed in Claim 8, characterized in that said means (35) is capable of reducing the speed of said turbulence inducing fan (21, 32) to about 5% of its normal operating speed.

10. A tunnel freezer as claimed in any of Claims 5 to 9, characterized in that it further comprises a control unit in which is programmed turbulence inducing fan speeds suitable for use with specific products.

11. A tunnel freezer as claimed in any of Claims 5 to 10, characterized in that it includes a height gauge for monitoring the height of product entering said tunnel freezer (1) and means for automatically adjusting the speed of said turbulence inducing fan(s) in response thereto.

12. A tunnel freezer as claimed in any of Claims 5 to 11, including at least one gas transfer fan for transferring gas along said tunnel freezer.

13. A tunnel freezer as claimed in any of Claims 5 to 12, having at least two sections (2, 3, 4, 5), each section (3) having a temperature sensor (26), means (22, 29, 30) for supplying a cryogenic fluid to said section in response to said temperature sensor (26), at least one turbulence inducing fan (21, 32), and means (35) to adjust the speed of said turbulence inducing fan (21, 32).

14. A tunnel freezer as claimed in Claim 13, including four sections (2, 3, 4, 5).

15. A tunnel freezer as claimed in Claim 14, including control means for maintaining said sections at different temperatures when said tunnel freezer is in use.

16. A tunnel freezer as claimed in Claim 15, wherein said temperatures are -40°C±5°C, -73°C±5°C, -107°C±5°C, and -140°C±5°C.

17. A tunnel freezer as claimed in Claim 13, 14, 15 or 16, wherein said means for supplying a cryogenic fluid to said tunnel comprises a nozzle (22) arranged to supply a cryogenic fluid into the vicinity of said turbulence inducing fan.

18. A tunnel freezer as claimed in any of Claims 13 to 17, including a tunnel (1), a conveyor (9) extending along said tunnel, a turbulence inducing fan (21, 32) positioned below said conveyor (9), a cowl (20) disposed beneath said conveyor (9) and arranged to duct cryogenic fluid to said turbulence inducing fan (21, 32), a passageway (24) to either side of said turbulence inducing fan (21, 32) for ducting cryogenic fluid from said fan into a space above said conveyor, and a deflector in the roof of said tunnel (1) for directing said cryogenic fluid from said turbulence inducing fan downwardly towards said conveyor, wherein said means for supplying a cryogenic fluid to said tunnel comprises a nozzle (29, 30) in or adjacent the roof of said tunnel (1).

19. A tunnel freezer as claimed in Claim 18, wherein said deflector has, in cross-section, the shape of a cusp and a nozzle opens into said tunnel to either side of the tip of said cusp.

## Patentansprüche

1. Verfahren zum Betrieb eines Gefriertunnels, der wenigstens einen turbulenzerzeugenden Ventilator und Mittel, um besagten turbulenzerzeugenden Ventilator anzutreiben, aufweist, gekennzeichnet durch den Schritt des Regulierens der Arbeitsleistung besagten Ventilators, so daß jede Erhöhung seiner Arbeitsleistung die Gesamtzeit zum Durchfrieren des Produktes nicht wesentlich verringern wird, während eine Verringerung der Arbeitsleistung die Gesamtzeit zum Durchfrieren des Produktes wesentlich erhöhen wird.

2. Verfahren gemäß Anspruch 1, worin besagter Gefriertunnel wenigstens zwei Abschnitte (2, 3, 4, 5) aufweist, wobei jeder Abschnitt (3) einen Temperatursensor (26), Mittel (22, 29, 30) zur Zufuhr einer kryogenischen Flüssigkeit zu besagtem Abschnitt als Reaktion auf besagten Temperatursensor (26), wenigstens einen turbulenzerzeugenden Ventilator (21, 32) und Mittel (35), um die Arbeitsleistung des besagten turbulenzerzeugenden Ventilators (21, 32) zu regeln, besitzt, gekennzeichnet durch den Schritt des Haltens besagter Abschnitte bei verschiedenen Temperaturen, wenn besagter Gefriertunnel in Betrieb ist.

3. Verfahren gemäß Anspruch 2, dadurch gekennzeichnet, daß besagter Tunnel vier Abschnitte einschließt.

4. Verfahren gemäß Anspruch 3, dadurch gekennzeichnet, daß besagte Temperaturen -40 °C ± 5 °C, -73 °C ± 5 °C, -107 °C ± 5 °C und -140 °C ± 5 °C sind.

5. Gefriertunnel zur Durchführung eines Verfahrens gemäß Anspruch 1, wobei besagter Gefriertunnel (1) wenigstens einen turbulenzerzeugenden Ventilator (21, 32) und Mittel (35), um besagten turbulenzerzeugenden Ventilator (21, 32) anzutreiben, hat und besagter Gefriertunnel (1) weiterhin Mittel (35) umfaßt, um die Arbeitsleistung besagten turbulenzerzeugenden Ventilators zu variieren, so daß jede Erhöhung seiner Arbeitsleistung die Gesamtzeit zum Durchfrieren des Produktes nicht wesentlich verringern wird, während eine Verringerung der Arbeitsleistung die Zeit zum Durchfrieren des Produktes wesentlich erhöhen wird.

6. Gefriertunnel gemäß Anspruch 5, dadurch gekennzeichnet, daß besagte Mittel (35) zur Verringerung der Geschwindigkeit besagten turbulenzerzeugenden Ventilators (21, 32) auf etwa 50 % seiner normalen Arbeitsgeschwindigkeit fähig ist.

7. Gefriertunnel gemäß Anspruch 6, dadurch gekennzeichnet, daß besagte Mittel (35) zur Verringerung der Geschwindigkeit besagten turbulenzerzeugenden Ventilators (21, 32) auf etwa 30 % seiner normalen Arbeitsgeschwindigkeit fähig ist.

8. Gefriertunnel gemäß Anspruch 7, dadurch gekennzeichnet, daß besagte Mittel (35) zur Verringerung der Geschwindigkeit besagten turbulenzerzeugenden Ventilators (21, 32) auf etwa 20 % seiner normalen Arbeitsgeschwindigkeit fähig ist.

9. Gefriertunnel gemäß Anspruch 8, dadurch gekennzeichnet, daß besagte Mittel (35) zur Verringerung der Geschwindigkeit besagten turbulenzerzeugenden Ventilators (21, 32) auf etwa 5 % seiner normalen Arbeitsgeschwindigkeit fähig ist.

10. Gefriertunnel gemäß jedem der Ansprüche 5 bis 9, dadurch gekennzeichnet, daß er weiterhin eine Regeleinheit umfaßt, in der die Geschwindigkeiten des turbulenzerzeugenden Ventilators, die bei der Verwendung spezieller Produkte geeignet sind, programmiert sind.

11. Gefriertunnel gemäß jedem der Ansprüche 5 bis 10, dadurch gekennzeichnet, daß er ein Höhenmeßgerät zum Überwachen der Höhe des Produktes, das in besagten Gefriertunnel 1 eintritt, und Mittel zum automatischen Regeln der Geschwindigkeit besagten turbulenzerzeugenden Ventilators/Ventilatoren als Reaktion darauf einschließt.

12. Gefriertunnel gemäß jedem der Ansprüche 5 bis 11, dadurch gekennzeichnet, daß er wenigstens einen Gasübertragungsventilator zum Übertragen des Gases entlang besagten Gefriertunnels einschließt.

13. Gefriertunnel gemäß jedem der Ansprüche 5 bis 12, dadurch gekennzeichnet, daß er wenigstens zwei Abschnitte (2, 3, 4, 5) aufweist, wobei jeder Abschnitt (3) einen Temperatursensor (26), Mittel (22, 29, 30) zur Zufuhr einer kryogenischen Flüssigkeit zu besagtem Abschnitt als Reaktion auf besagten Temperatursensor (26), wenigstens einen turbulenzerzeugenden Ventilator (21, 32) und Mittel (35), um die Geschwindigkeit besagten turbulenzerzeugenden Ventilators (21, 32) zu regeln, besitzt.

14. Gefriertunnel gemäß Anspruch 13, dadurch gekennzeichnet, daß er vier Abschnitte (2, 3, 4, 5) einschließt.

15. Gefriertunnel gemäß Anspruch 14, dadurch gekennzeichnet, daß er Kontrollmittel zum Halten besagter Abschnitte bei verschiedenen Temperaturen einschließt, wenn besagter Gefriertunnel in Betrieb ist.

16. Gefriertunnel gemäß Anspruch 15, dadurch gekennzeichnet, daß besagte Temperaturen -40 °C ± 5 °C, -73 °C ± 5 °C, -107 °C ± 5 °C und -140 °C ± 5 °C sind.

17. Gefriertunnel gemäß Anspruch 13, 14, 15 oder 16, dadurch gekennzeichnet, daß besagte Mittel zur Zufuhr einer kryogenischen Flüssigkeit zu besagtem Tunnel eine Düse (22) umfassen, die eingerichtet ist, um eine kryogenische Flüssigkeit in die Umgebung besagten turbulenzerzeugenden Ventilators zu führen.

18. Gefriertunnel gemäß jedem der Ansprüche 13 bis 17, dadurch gekennzeichnet, daß er einen Tunnel (1), eine Fördereinrichtung (9), die sich entlang besagten Tunnels erstreckt, einen turbulenzerzeugenden Ventilator (21, 32), der sich unter besagter Fördereinrichtung (9) befindet, eine Windhaube (20), die unterhalb besagter Fördereinrichtung (9) angeordnet und eingerichtet ist, um kryogenische Flüssigkeit zu besagtem turbulenzerzeugenden Ventilator (21, 32) zu leiten, einen Durchgang (24) zu jeder Seite besagten turbulenzerzeugenden Ventilators (21, 32) zum Leiten der kryogenischen Flüssigkeit von besagtem Ventilator in den Raum über besagter Fördereinrichtung und eine Ablenkwand im Dach besagten Tunnels (1) zum Führen besagter kryogenischer Flüssigkeit von besagtem turbulenzerzeugenden Ventilator nach unten zu besagter Fördereinrichtung einschließt, wobei besagte Mittel zum Zuführen einer kryogenischen Flüssigkeit zu besagtem Tunnel eine Düse (29, 30) in oder am Dach besagten Tunnels (1) umfassen.

19. Gefriertunnel gemäß Anspruch 18, dadurch gekennzeichnet, daß besagte Ablenkwand im Querschnitt die Form einer Kurve und eine Düse hat, die in besagtem Tunnel zu jeder Seite der Spitze der besagten Kurve offen ist.

## Revendications

1. Un procédé de fonctionnement d'un tunnel de congélation ayant au moins un ventilateur induisant une turbulence et un moyen pour entraîner ledit ventilateur induisant une turbulence, caractérisé par l'étape consistant à régler le débit dudit ventilateur afin que n'importe quelle augmentation dans son débit ne réduise pas matériellement la durée globale pour la congélation du produit alors qu'une réduction dans le débit augmentera matériellement la durée globale pour la congélation du produit.

2. Un procédé selon la revendication 1, dans lequel ledit tunnel de congélation comprend au moins deux sections (2,3,4,5), chaque section (3) ayant un capteur de température (26), des moyens (22,29,30) pour amener un fluide cryogène à ladite section en réponse audit capteur de température (26), au moins un ventilateur induisant une turbulence (21,32) et un moyen (35) pour régler le débit dudit ventilateur induisant une turbulence (21,32), caractérisé par l'étape consistant à maintenir lesdites sections à des températures différentes quand ledit tunnel de congélation est en service.

3. Un procédé selon la revendication 2, dans lequel ledit tunnel comprend quatre sections.

4. Un procédé selon la revendication 3, dans lequel lesdites températures sont - 40°C ± 5°C, - 73°C ± 5°C, - 107°C ± 5°C et - 140°C ± 5°C.

5. Un tunnel de congélation pour la mise en oeuvre d'un procédé selon la revendication 1, ledit tunnel de congélation (1) ayant au moins un ventilateur induisant une turbulence (21,32) et un moyen (35) pour entraîner ledit ventilateur induisant une turbulence (21,32), ledit tunnel de congélation (1) comprenant, en outre, un moyen (35) pour faire varier le débit dudit ventilateur induisant une turbulence afin que n'importe quelle augmentation dans son débit ne réduise pas matériellement la durée globale pour la congélation du produit alors qu'une réduction dans le débit augmentera matériellement la durée pour la congélation du produit.

6. Un tunnel de congélation selon la revendication 5, caractérisé en ce que ledit moyen (35) est capable de réduire la vitesse dudit ventilateur induisant une turbulence (21,32) à environ 50% de sa vitesse de fonctionnement normal.

7. Un tunnel de congélation selon la revendication 6, caractérisé en ce que ledit moyen (35) est capable de réduire la vitesse dudit ventilateur induisant une turbulence (21,32) à environ 30% de sa vitesse de fonctionnement normal.

8. Un tunnel de congélation selon la revendication 7, caractérisé en ce que ledit moyen (35) est capable de réduire la vitesse dudit ventilateur induisant une turbulence (21,32) à environ 20% de sa vitesse de fonctionnement normal.

9. Un tunnel de congélation selon la revendication 8, caractérisé en ce que ledit moyen (35) est capable de réduire la vitesse dudit ventilateur induisant une turbulence (21,32) à environ 5% de sa vitesse de fonctionnement normal.

10. Un tunnel de congélation selon l'une quelconque des revendications 5 à 9, caractérisé en ce qu'il comprend, en outre, une unité de commande dans laquelle sont programmées les vitesses du ventilateur induisant une turbulence appropriées pour une utilisation avec des produits spécifiques.

11. Un tunnel de congélation selon l'une quelconque des revendications 5 à 10, caractérisé en ce qu'il comprend une jauge de hauteur pour contrôler la hauteur du produit entrant dans ledit tunnel de congélation (1) et un moyen pour régler automatiquement la vitesse dudit ou desdits ventilateur(s) induisant une turbulence en réponse à celle-ci.

12. Un tunnel de congélation selon l'une quelconque des revendications 5 à 11, comprenant au moins un ventilateur de transfert de gaz pour transférer du gaz le long dudit tunnel de congélation.

13. Un tunnel de congélation selon l'une quelconque des revendications 5 à 12, ayant au moins deux sections (2,3,4,5), chaque section (3) ayant un capteur de température (26), un moyen (22,29,30) pour amener un fluide cryogène à ladite section en réponse audit capteur de température (26), au moins un ventilateur induisant une turbulence (21,32) et un moyen (35) pour régler la vitesse dudit ventilateur induisant une turbulence (21,32).

14. Un tunnel de congélation selon la revendication 13, comprenant quatre sections (2, 3, 4, 5).

15. Un tunnel de congélation selon la revendication 14, comprenant un moyen de commande pour maintenir lesdites sections à des températures différentes quand ledit tunnel de congélation est en service.

16. Un tunnel de congélation selon la revendication 15, dans lequel lesdites températures sont - 40°C ± 5°C, - 73°C ± 5°C, - 107°C ± 5°C et - 140°C ± 5°C .

17. Un tunnel de congélation selon la revendication 13,14,15 ou 16, dans lequel ledit moyen pour amener un fluide cryogène audit tunnel comprend une buse (22) agencée pour alimenter un fluide cryogène au voisinage dudit ventilateur induisant une turbulence.

18. Un tunnel de congélation selon l'une quelconque des revendication 13 à 17, comprenant un tunnel (1), un transporteur (9) s'étendant le long dudit tunnel, un ventilateur induisant une turbulence (21,32) situé en dessous dudit transporteur (9), un capot (20) disposé en dessous dudit transporteur (9) et agencé pour conduire le fluide cryogène audit ventilateur induisant une turbulence (21,32) un passage (24) sur l'un ou l'autre côté dudit ventilateur induisant une turbulence (21,32) pour conduire le fluide cryogène à partir dudit ventilateur dans un espace au dessus dudit transporteur et un déflecteur dans le toit dudit tunnel (1) pour diriger ledit fluide cryogène à partir dudit ventilateur induisant une turbulence vers le bas vers ledit transporteur, dans lequel ledit moyen pour amener un fluide cryogène audit tunnel comprend une buse (29,30) dans ou près du toit dudit tunnel (1).

19. Un tunnel de congélation selon la revendication 18, dans lequel ledit déflecteur présente, en coupe transversale la forme d'une pointe et une buse débouche dans ledit tunnel sur l'un ou l'autre côté de l'extrémité de ladite pointe.
